# EUROPEAN PATENT SPECIFICATION

(11) **EP 3 909 839 B1**
(45) Date of publication and mention of the grant of the patent: **03.07.2024**
(21) Application number: 19916534.1
(22) Date of filing: 27.12.2019
(51) Int. Cl.: B63B 39/06

(54) **CONTROL DEVICE AND SHIP AND SHIP CONTROL METHOD PROVIDED WITH CONTROL DEVICE**
STEUERVORRICHTUNG UND SCHIFF UND SCHIFFSSTEUERUNGSVERFAHREN MIT EINER STEUERVORRICHTUNG
DISPOSITIF DE COMMANDE DE NAVIRE ET PROCÉDÉ DE COMMANDE DU NAVIRE FOURNI AVEC DISPOSITIF DE COMMANDE

(30) Priority: 22.02.2019 JP 2019030838
(43) Date of publication of application: 17.11.2021
(73) Proprietor: Mitsubishi Heavy Industries Marine Machinery & Equipment Co., Ltd., Nagasaki-shi Nagasaki 8508610 (JP)
(72) Inventor: DOBASHI, Shuji, Nagasaki-shi, Nagasaki 850-8610 (JP); SUZUKI, Takashi, Nagasaki-shi, Nagasaki 850-8610 (JP)
(74) Representative: Hoffmann Eitle
(86) International application number: PCT/JP2019/051498
(87) International publication number: WO 2020/170614

(56) References cited:
- WO-A1-2014/174390
- JP-A- H0 840 364
- JP-A- 2004 262 431
- JP-A- 2004 291 773
- JP-A- 2016 141 336
- US-A- 2 979 010
- US-A- 5 235 930
- US-A1- 2017 247 090

## Description

### {Technical Field}

The present disclosure relates to a control device, a ship having the same, and a method of controlling a ship.

### {Background Art}

There are ships having fin stabilizers to suppress rolling motion of a ship under way and during stoppage on sea. The fin stabilizer detects rolling motion under way, controls a fin angle to cause the fin to generate lifting force, and suppresses the rolling motion of the hull by the lifting force moment. The fin stabilizers are controlled by a control device.

For example, Japanese Patent No. 6253205 discloses calculating a rolling motion cycle from the inclination (roll angle) in a roll direction of a ship and controlling fin stabilizers based on this rolling motion cycle.

Further, Japanese Patent No. 2610761 discloses detecting a pitch angle and a roll angle of a ship, calculating a distribution of lifting force to be generated by a plurality of fins so as to suppress the pitch angle and the roll angle, and controlling the plurality of fins, individually.

A ship stabilization system using a fin which can be rotated around its longitudinal axis is disclosed in US 2,979,010.

US 2017/0247090 A1 discloses a ship stabilization system with pivotable stabilizer fins which can be shifted from a retracted state and an extended state.

WO 2014/174390 A1 discloses a ship stabilization system which represents the closest prior art.

### {Summary of Invention}

### {Technical Problem}

In the inventions disclosed in Japanese Patent No. 6253205 and Japanese Patent No. 2610761 described above, however, there is no consideration of control for activation and stop (retraction) of the fin stabilizer. Thus, there is a problem that activation and stop (retraction) of the fin stabilizer requires a ship's crew to make a decision and work.

Some crews may make much of safe navigating and thus always use the fin stabilizer to provide for sudden rolling motion even when the hydrographic condition is relatively calm. On the other hand, the ship management section concerns about deterioration of fuel consumption due to the use of the fin stabilizer and demands to suppress the use of the fin stabilizer to the minimum.

The present disclosure has been made in view of such circumstances and intends to provide a control device that can control start and stop of a fin stabilizer and to provide a ship having the control device and a method of controlling the ship.

### {Solution to Problem}

The problem described above is solved by a control device with the features of claim 1 or 2, the ship with the features of claim 7, and the method of controlling a ship with the features of claims 8 or 9. Preferred embodiments follow from the other claims.

A control device according to one aspect of some embodiments of the present disclosure is a control device of a ship having retractable fin stabilizers on both sides. The control device is configured to perform control of: acquiring attitude information from an information measuring device that measures the attitude information on the ship in which the attitude information is any one of a fin operation angle of each of the fin stabilizers and a ship speed of the ship; when the fin stabilizers on both sides are in operation, retracting a fin of either one of the fin stabilizers when it is determined that the attitude information is less than a first predetermined value; and when either one of the fin stabilizers is in operation, retracting fins of the fin stabilizers on both sides when it is determined that the attitude information is less than a second predetermined value.

According to the present aspect, when the fin stabilizers on both sides are in operation, the fin of either one of the fin stabilizers is retracted if the attitude information on the ship is less than the first predetermined value, and when the fin stabilizer on one side is in operation, the fins of the fin stabilizers on both sides are retracted if the attitude information is less than the second predetermined value. Accordingly, it can be determined based on the attitude information on the ship whether or not one or both fins of one or both fin stabilizers are required to be retracted, and if required, one or both fins can be automatically retracted. Since the determination as to whether or not retraction is required is automatically performed based on a quantitative condition, it is neither necessary for a crew to always monitor the motion of the ship nor to have a skillful technique for the determination.

Since the fin stabilizer is to convert propulsion force of a ship into force that prevents rolling motion in order to suppress rolling motion of the ship, the use of the fin stabilizer may reduce the ship speed and thus may cause deterioration of fuel consumption of the main engine of the ship.

In the present aspect, when it is determined based on attitude information on the ship that the motion is small, one of the fins is retracted to perform one-side stabilizing operation, and when the motion has subsided, the fins of the fin stabilizers on both sides are retracted. According to the present aspect, one or both fin stabilizers are used only when required and are retracted when not required, which can suppress the fuel consumption of a main engine of the ship and contribute to energy saving. When it is not required to use the fin stabilizers on both sides even though there is some motion of the ship, the use of only the fin stabilizer on one side can achieve both motion reduction performance and power saving.

The situation that lifting force by the fin stabilizer is no longer necessary can be determined from a reduced fin operation angle of the fin stabilizer. The fin operation angle is controlled to increase when the rolling motion of the ship is large and to decrease when the rolling motion is small. When the fin operation angle is small, there is a less need for operating the fin stabilizer because the rolling motion of the ship is small, and it is therefore possible to determine that the fin of the fin stabilizer can be retracted.

Further, the fin of the fin stabilizer is automatically retracted if the ship speed becomes less than a predetermined speed when the ship reaches land.

A control device according to one aspect of some embodiments of the present disclosure is a control device of a ship having retractable fin stabilizers on both sides. The control device is configured to perform control of: acquiring attitude information from an information measuring device that measures the attitude information on the ship, wherein the attitude information is any one of a fin operation angle of each of the fin stabilizers and a roll angle of the ship; when fins of the fin stabilizers on both sides are in a retracted state, activating a fin of either one of the fin stabilizers when it is determined that the attitude information is greater than a third predetermined value; and when a fin of either one of the fin stabilizers is in a retracted state, activating the fin stabilizers on both sides when it is determined that the attitude information is greater than a fourth predetermined value.

According to the present aspect, when the fins of the fin stabilizers on both sides are in a retracted state, either one of the fin stabilizers is activated if the attitude information on the ship is greater than the third predetermined value, and when the fin of either one of the fin stabilizers is in a retracted state, the fin stabilizers on both sides are actuated if the attitude information is greater than the fourth predetermined value. It can be determined based on the attitude information on the ship whether or not one or both fin stabilizers are required to be activated, and if required, one or both fin stabilizers can be automatically activated. Since the determination as to whether or not activation is required is automatically performed based on a quantitative condition, it is neither necessary for a crew to always monitor motion of the ship nor to have a skillful technique for the determination.

The fin stabilizer is to convert propulsion of a ship into force that prevents rolling motion in order to suppress rolling motion of the ship. The use of the fin stabilizer may reduce the ship speed and thus may cause deterioration of fuel consumption of the main engine of the ship.

In the present aspect, when it is determined based on attitude information on the ship that motion is occurring, one of the fin stabilizers is activated to perform one-side stabilizing operation, and when the motion does not subside even with the one-side stabilizing operation, the fin stabilizers on both sides are activated. According to the present aspect, one or both fin stabilizers are used only when required, which can suppress the fuel consumption of the main engine of the ship and contribute to energy saving. When it is not required to use the fin stabilizers on both sides even though there is some motion of the ship, the use of only the fin stabilizer on one side can achieve both motion reduction performance and power saving.

The situation that lifting force by the fin stabilizer is necessary can be determined from an increased roll angle of the ship due to occurrence of rolling motion of the ship. Further, a fin operation angle corresponding to the roll angle that requires lifting force may be calculated to make the determination also from an increased fin operation angle.

In the aspect described above, the control device may perform control of, when fins of the fin stabilizers on both sides are in a retracted state, activating either one of the fin stabilizers when it is determined that the attitude information is greater than the third predetermined value and a ship speed of the ship exceeds a predetermined threshold, and when a fin of either one of the fin stabilizers is in a retracted state, activating the fin stabilizers on both sides when it is determined that the attitude information is greater than the fourth predetermined value and a ship speed of the ship exceeds a predetermined threshold.

According to the present aspect, it can be determined that it is necessary to reduce the motion of the ship because rolling motion of the ship is occurring and that it is possible to generate lifting force by one or both fin stabilizers because the ship speed is high. Therefore, since one or both fin stabilizers are activated when the ship can provide required lifting force, the motion reduction performance by the fin stabilizer can be effectively and suitably utilized.

In the aspect described above, a position information detection unit that detects position information on the ship; and a weather information detection unit that, based on the position information, identifies a sea area in which the ship navigates and detects weather information on the sea area may be provided. The weather information may include wave direction information or wind direction information on the sea area, and the control device may perform control of, when either one of the fin stabilizers is operated to perform one-side stabilizing operation, operating one of the fin stabilizers on a side not subjected to waves or a leeward side based on the wave direction information or the wind direction information.

According to the present aspect, when either one of the fin stabilizers is operated to perform one-side stabilizing operation, since the fin stabilizer to be operated is determined based on wave direction information or wind direction information, the control can be performed to operate the fin stabilizer on the side not subjected to waves when the determination is based on the wave direction information or operate the fin stabilizer on the leeward side when the determination is based on the wind direction information.

When either one of the fin stabilizers is operated, it is preferable that the fin stabilizer in use be not affected by fluid movement due to waves. This is because, if waves break onto the fin, it is no longer possible to exert expected lifting force. Thus, if the fin stabilizer on the side not subjected to waves or on the leeward side is operated, this enables selection and operation of the fin stabilizer which is less likely to be affected by fluid movement due to waves and can exert the expected lifting force.

In the aspect described above, a traveling direction detection unit that detects a traveling direction of the ship may be provided. The control device may perform control of, when either one of the fin stabilizers is operated to perform one-side stabilizing operation, operating the fin stabilizer on a coastal side out of the fin stabilizers on the coastal side and an offshore side based on the traveling direction and the position information.

According to the present aspect, when either one of the fin stabilizers is operated to perform one-side stabilizing operation, since the fin stabilizer to be operated is determined based on the traveling direction and position information, the positional relationship to a coast (land) can be recognized from the traveling direction and the position information, and the control can be performed to operate the fin stabilizer on the coastal side out of the fin stabilizers on the coastal side and the offshore side.

For example, when a ship navigates in the waters around Japan, waves break onto the coast from the offing. It is considered that these waves affect the hull motion. For example, when a ship navigates in the Pacific Ocean, the starboard of the ship is often subjected to waves when the traveling direction is northeast, and the port of the ship is often subjected to waves when the traveling direction is southwest that is the opposite to the above. On the other hand, when a ship navigates in the Sea of Japan, the tendency will be opposite to the above.

Thus, when the ship navigates in the Pacific Ocean, the fin stabilizer on the port side of the ship is preferentially operated when the traveling direction is northeast, and the fin stabilizer on the starboard side of the ship is preferentially operated when the traveling direction is southwest. Accordingly, the impact of waves can be suppressed, and the lifting force by each fin stabilizer can be effectively exerted.

In the aspect described above, an hour meter that measures operation periods of motors may be installed in the motors that operate the fin stabilizers, and the control device may perform control of, when either one of the fin stabilizers is operated to perform one-side stabilizing operation, operating one of the fin stabilizer having the shorter operation period.

According to the present aspect, when either one of the fin stabilizers is operated to perform one-side stabilizing operation, since the control is performed to operate the fin stabilizer having the shorter operation period measured by the hour meter, imbalance in the drive periods of the fin stabilizers can be suppressed, and the drive periods of respective fin stabilizers can be equalized.

A ship according to one aspect according to some embodiments of the present disclosure includes the control device described above.

A method of controlling a ship according to one aspect of some embodiments of the present disclosure is a method of controlling a ship having retractable fin stabilizers on both sides of the ship. The method includes: a step of acquiring attitude information on the ship, wherein the attitude information is any one of a fin operation angle of each of the fin stabilizers and a ship speed of the ship; a one-side retraction step of, when the fin stabilizers on both sides are in operation, retracting a fin of either one of the fin stabilizers when it is determined that the attitude information is less than a first predetermined value; and a both-side retraction step of, when either one of the fin stabilizers is in operation in accordance with the one-side retraction step, retracting fins of the fin stabilizers on both sides when it is determined that the attitude information is less than a second predetermined value.

A method of controlling a ship according to one aspect of some embodiments of the present disclosure is a method of controlling a ship having retractable fin stabilizers on both sides of the ship. The method includes: a step of acquiring attitude information on the ship, wherein the attitude information is any one of a fin operation angle of each of the fin stabilizers and a roll angle of the ship; a one-side activation step of, when fins of the fin stabilizers on both sides are in a retracted state, activating either one of the fin stabilizers when it is determined that the attitude information is greater than a third predetermined value; and a both-side activation step of, when a fin of either one of the fin stabilizers is in a retracted state in accordance with the one-side activation step, activating the fin stabilizers on both sides when it is determined that the attitude information is greater than a fourth predetermined value.

### {Advantageous Effects of Invention}

According to the present disclosure, since activation and stop of one or both fin stabilizers are automatically controlled based on attitude information on a ship, one or both fins of one or both fin stabilizers are retracted to reduce propulsion resistance when one or both fin stabilizers are not required to be used, and this can suppress fuel consumption of a main engine and contribute to energy saving.

### {Brief Description of Drawings}

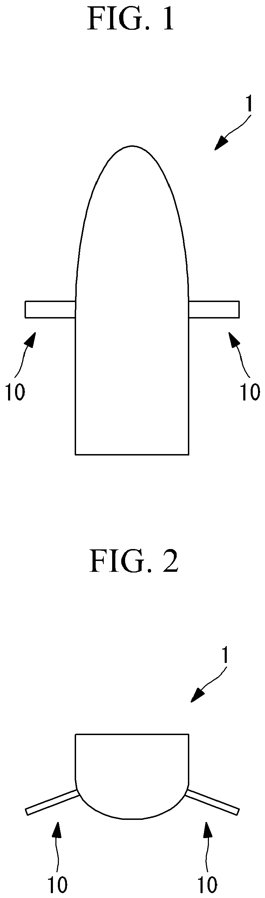

{Fig. 1}
   Fig. 1 is a plan view of a ship.
{Fig. 2}
   Fig. 2 is a front view of the ship.
{Fig. 3}
   Fig. 3 is a side view illustrating a retracted state of a port fin stabilizer.
{Fig. 4}
   Fig. 4 is a perspective view illustrating an operating state of the port fin stabilizer.
{Fig. 5}
   Fig. 5 is a side view illustrating a non-pivoted state of a fin and a flap of the port fin stabilizer.
{Fig. 6}
   Fig. 6 is a side view illustrating a pivoted state of the fin and the flap of the port fin stabilizer.
{Fig. 7}
   Fig. 7 is a side view illustrating a pivoted state of the fin and the flap of the port fin stabilizer.
{Fig. 8}
   Fig. 8 is block diagram illustrating one aspect of a control device according to some embodiments.
{Fig. 9}
   Fig. 9 is a flowchart illustrating one aspect of control performed by the control device when the fin stabilizers are in operation according to some embodiments.
{Fig. 10}
   Fig. 10 is a flowchart illustrating one aspect of control performed by the control device when the fin stabilizers are not in operation according to some embodiments.
{Fig. 11}
   Fig. 11 is a plan view illustrating an example of a ship navigating near a coast.

### {Description of Embodiments}

Each embodiment of a control device, a ship having the control device, and a method of controlling the ship according to some embodiments of the present disclosure will be described below with reference to the drawings.

Fig. 1 illustrates, in a plan view, one aspect of the ship having the control device according to some embodiment of the present disclosure.

Fig. 2 illustrates, in a front view, one aspect of the ship.

As illustrated in Fig. 1, the ship 1 has fin stabilizers 10 on the starboard and the port.

As illustrated in Fig. 2, the fin stabilizers 10 are arranged so as to project diagonally downward from the ship bottom curved part of the ship 1.

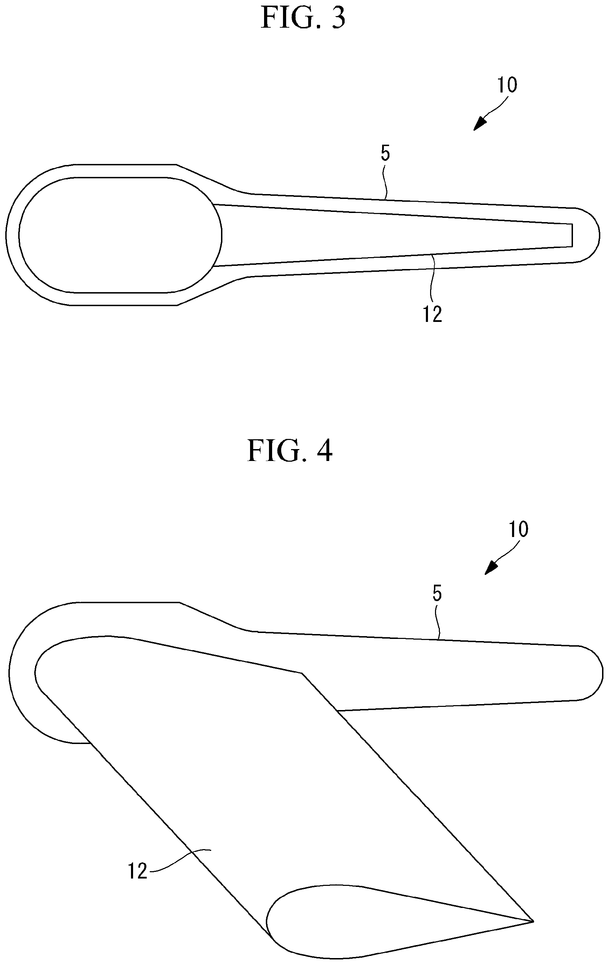

Fig. 3 illustrates a side view illustrating a retracted state of the port fin stabilizer of the ship having the control device according to some embodiments of the present disclosure, and Fig. 4 illustrates a perspective view illustrating an operating state of the port fin stabilizer.

Each fin stabilizer 10 has a fin shaft (not illustrated), and a fin 12 of the fin stabilizer 10 can pivot about the fin shaft.

As illustrated in Fig. 3, in a retracted state, the fin 12 is retracted in a fin recess 5 of the ship 1. The fin recess 5 is recessed inside the ship 1 so that the whole fin 12 can be retracted in the ship 1. The starboard fin 12 is retracted in the same manner. The fin 12 is not subjected to water resistance when retracted in the fin recess 5.

Further, as illustrated in Fig. 4, in the operating state, the fin 12 pivots in the bow direction from the fin recess 5 and protrudes from the ship 1. The starboard fin 12 is operated in the same manner. Fig. 1 and Fig. 2 each illustrate a state where the starboard and port fin stabilizers 10 are in operation.

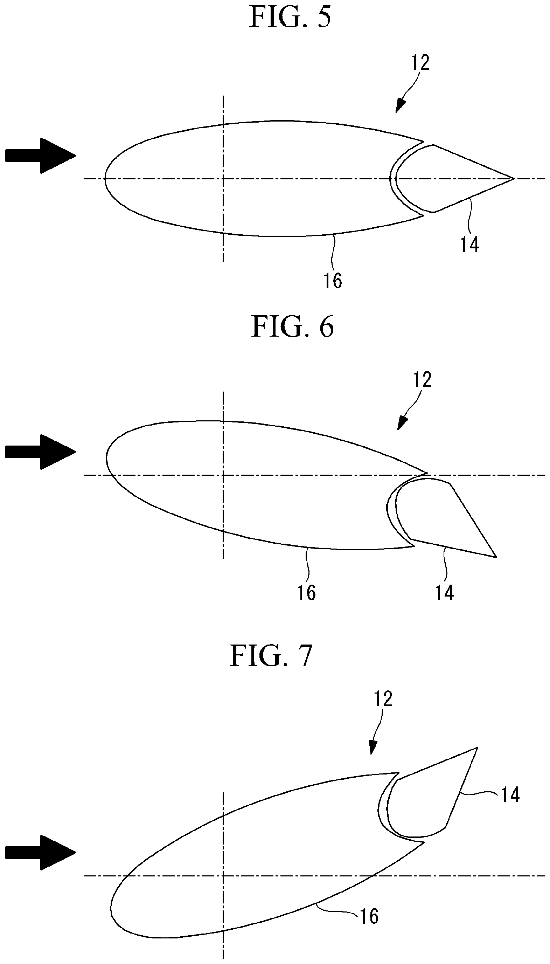

Fig. 5 illustrates the side view illustrating a non-pivoted state of a fin body and a flap of the port fin stabilizer, and Fig. 6 and Fig. 7 illustrate side views each illustrating a state where the fin body and the flap of the fin stabilizer are pivoted, respectively. Each arrow in Fig. 5 to Fig. 7 illustrates a water flow direction.

As illustrated in Fig. 5, the fin 12 has a fin body 16 and a flap 14. The fin body 16 can pivot about the fin shaft, and the flap 14 can pivot independently of the fin body 16. The fin shaft is provided at the intersection of dot-dash lines of Fig. 5 intersecting each other. When the fin body 16 and the flap 14 do not pivot and are in parallel to a water flow, substantially no lifting force is generated.

When the fin body 16 and the flap 14 pivot as illustrated in Fig. 6 and Fig. 7, lifting force in accordance with water flow generated by the traveling of the ship 1 is generated in accordance with the angle of the fin 12 (fin operation angle) and prevents rolling motion of the hull. When the fin body 16 pivots, the flap 14 is not required to pivot. The flap 14 is used when the lifting force by the fin body 16 is finely tuned.

The magnitude of lifting force generated by the fin stabilizer 10 is found based on the fin operation angle and the speed of the water flow caused by traveling of the ship 1. The fin operation angle is controlled by a fin stabilizer control unit 41 described later of a control device 40. The fin operation angle is controlled to increase when the rolling motion of the ship 1 is large, and the fin operation angle is controlled to decrease when the rolling motion is small.

Further, the fin stabilizer 10 generates lifting force by using a water flow generated by traveling of the ship 1. As a nature of the fin stabilizer 10, no attenuation effect against rolling motion can be obtained when the speed of the ship 1 is less than a predetermined speed. Thus, if the ship speed detected by a ship speed detection unit 31 described later is less than a predetermined speed, the fin stabilizer 10 is stopped, and the fin 12 is retracted.

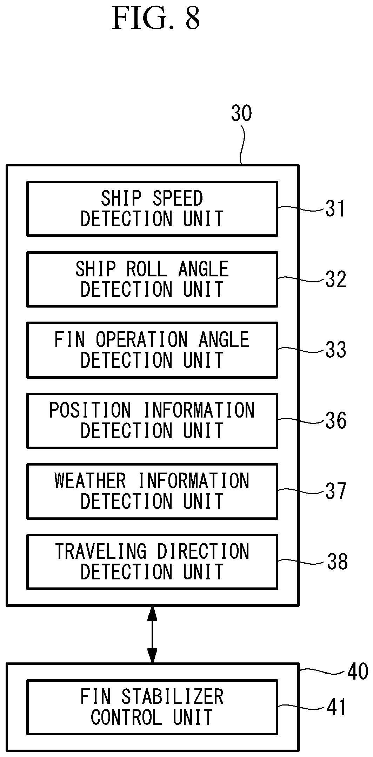

Fig. 8 illustrates a block diagram illustrating one aspect of the control device according to some embodiments.

An information measuring device 30 has the ship speed detection unit 31, a ship roll angle detection unit 32, and a fin operation angle detection unit 33. Further, a position information detection unit 36, a weather information detection unit 37, and a traveling direction detection unit 38 may be provided.

The ship speed detection unit 31 detects the speed of the ship 1 (ship speed) from electromagnetic logs, doppler logs, or the like, for example.

The ship roll angle detection unit 32 detects the roll angle indicating an attitude change of the ship 1 due to rolling motion based on a result determined by an acceleration sensor provided to the ship 1, for example.

The fin operation angle detection unit 33 detects a pivot angle (inclination) of the fin stabilizer 10.

The control device 40 has the fin stabilizer control unit 41.

The fin stabilizer control unit 41 acquires each information on the ship 1 detected by the information measuring device 30 and controls the fin stabilizer 10 based on the acquired information.

The control device 40 is formed of a central processing unit (CPU), a random access memory (RAM), a read only memory (ROM), a computer readable non-transitory storage medium, and the like, for example. Further, as an example, a series of processes to implement various functions is stored in a storage medium or the like in a form of a program. The CPU reads such a program into the RAM or the like and executes a process of edition and operation of information, and thereby various functions are implemented. Note that a form in which a program is installed in advance in a ROM or other storage mediums, a form in which a program is provided in a state of being stored in a computer readable storage medium, a form in which a program is delivered via a wired or wireless communication unit, or the like may be applied. The computer readable storage medium is a magnetic disk, a magneto-optical disk, a CD-ROM, a DVD-ROM, a semiconductor memory, or the like.

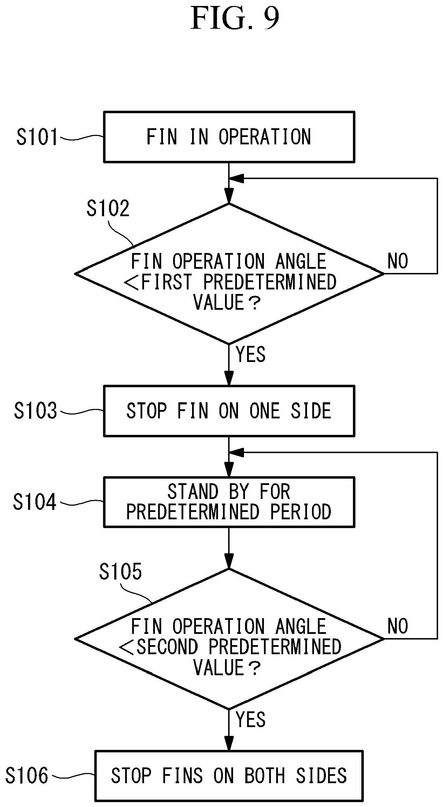

Fig. 9 illustrates a flowchart illustrating one aspect of the control performed by the control device when the fin stabilizers are in operation according to some embodiments.

It is assumed that the fin stabilizers 10 on both sides are in operation for preventing motion of the ship 1 (S101).

The control device 40 determines whether or not, out of attitude information acquired from the information measuring device 30, the fin operation angle of the fin stabilizer 10 detected by the fin operation angle detection unit 33 is smaller than a first predetermined value (S102). Herein, the first predetermined value is a fin operation angle corresponding to a roll angle at which rolling motion of the ship 1 can be suppressed within an acceptable range for the crew in terms of preventing passengers from falling, preventing cargos from collapsing, preventing seasickness, or the like by using only the fin stabilizer 10 on one side while stopping the fin stabilizer 10 on the other side and retracting the fin 12. The first predetermined value may be set in the control device 40 as an initial setting value or may be changed by the crew of the ship 1 to another setting.

If it is determined in step S102 that the fin operation angle is larger than or equal to the first predetermined value, the control device 40 continues to monitor the fin operation angle and performs the determination with respect to the first predetermined value.

On the other hand, if it is determined in step S102 that the fin operation angle is smaller than the first predetermined value, the fin stabilizer control unit 41 controls the fin stabilizer 10 on one side to stop and the fin 12 to retract (S103).

After the retraction of the fin 12 of the fin stabilizer 10 on one side, the control device 40 stands by for a predetermined period so that the ship operation with only the operation of the fin stabilizer 10 on one side is stabilized (S104) .

Next, the control device 40 determines whether or not, out of the attitude information acquired from the information measuring device 30, the fin operation angle of the fin stabilizer 10 detected by the fin operation angle detection unit 33 is smaller than a second predetermined value (S105). Herein, the second predetermined value is a fin operation angle corresponding to a roll angle at which rolling motion of the ship 1 can be suppressed within an acceptable range for the crew in terms of preventing passengers from falling, preventing cargos from collapsing, preventing seasickness, or the like even with the fin stabilizers 10 on both sides stopped and the fins 12 retracted. The second predetermined value may be set in the control device 40 as an initial setting value or may be changed by the crew of the ship 1 to another setting. Further, the first predetermined value and the second predetermined value can be set independently of each other and may be the same or may be different from each other.

If it is determined in step S105 that the fin operation angle is larger than or equal to the second predetermined value, the control device 40 continues to monitor the fin operation angle and performs the determination with the second predetermined value.

On the other hand, if it is determined in step S105 that the fin operation angle is smaller than the second predetermined value, the fin stabilizer control unit 41 stops the operating fin stabilizer 10 on one side and retracts the fin 12 thereof, that is, controls the fin stabilizers 10 on both sides to stop and the fins 12 to retract (S106).

In the control at activation of the fin stabilizer 10, the fin operation angle is used in the determination as to whether or not to activate the fin stabilizer 10 in the present embodiment, however, the ship speed of the ship 1 detected by the ship speed detection unit 31 may be used instead of the fin operation angle.

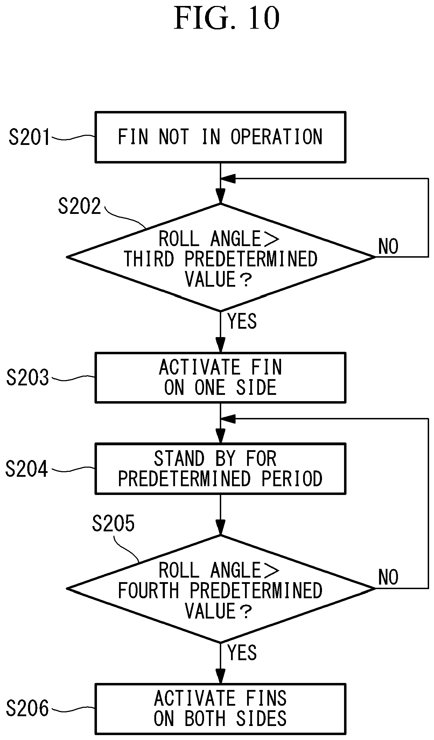

Fig. 10 illustrates a flowchart illustrating one aspect of control performed by the control device when the fin stabilizers are not in operation according to some embodiments.

It is assumed that the fin stabilizers 10 on both sides of the ship 1 have been stopped and the fins 12 have been retracted (S201).

The control device 40 determines whether or not, out of attitude information acquired from the information measuring device 30, the roll angle of the ship 1 detected by the ship roll angle detection unit 32 is larger than a third predetermined value (S202). Herein, the third predetermined value is a threshold of the roll angle for determining that it is necessary to suppress rolling motion of the ship 1 within an acceptable range for the crew in terms of preventing passengers from falling, preventing cargos from collapsing, preventing seasickness, or the like by activating the fin stabilizer 10 on one side to use only the fin stabilizer 10 on one side. The third predetermined value may be set in the control device 40 as an initial setting value or may be changed by the crew of the ship 1 to another setting.

If it is determined in step S202 that the roll angle is smaller than or equal to the third predetermined value, monitoring of the roll angle is continued to be performed, and the determination with respect to the third predetermined value is performed.

On the other hand, if it is determined in step S202 that the roll angle is larger than the third predetermined value, the fin stabilizer control unit 41 controls the fin stabilizer 10 on one side to be activated (S203).

Once the fin stabilizer 10 on one side is activated and operated, the control device 40 stands by for a predetermined period so that the ship operation with only the operation of the fin stabilizer 10 on one side is stabilized (S204).

Next, the control device 40 determines whether or not, out of the attitude information acquired from the information measuring device 30, the roll angle of the ship 1 detected by the ship roll angle detection unit 32 is larger than a fourth predetermined value (S205). Herein, the fourth predetermined value is a threshold of the roll angle for determining that it is necessary to suppress rolling motion of the ship 1 within an acceptable range for the crew in terms of preventing passengers from falling, preventing cargos from collapsing, preventing seasickness, or the like by activating the fin stabilizers 10 on both sides. The fourth predetermined value may be set in the control device 40 as an initial setting value or may be changed by the crew of the ship 1 to another setting. Further, the third predetermined value and the fourth predetermined value can be set independently of each other and may be the same or may be different from each other.

If it is determined in step S205 that the roll angle is smaller than or equal to the fourth predetermined value, the control device 40 continues to monitor the roll angle and performs the determination with respect to the fourth predetermined value.

On the other hand, if it is determined in step S205 that the roll angle is larger than the fourth predetermined value, the fin stabilizer control unit 41 activates the stopped fin stabilizer 10 on one side, that is, controls the fin stabilizers 10 on both sides to be activated and operated (S206) .

In the control during the fin stabilizer 10 being not in operation, the roll angle is used in the determination as to whether or not to activate the fin stabilizer 10 in the present embodiment, however, a fin operation angle corresponding to a roll angle may be calculated to determine whether or not to activate the fin stabilizer 10 in accordance with the value of the fin operation angle.

Further, the ship speed may be used in addition to a roll angle or a fin operation angle. It may be determined that it is necessary to activate the fin stabilizer 10 on one side if the roll angle or the calculated fin operation angle is larger than the third predetermined value and the ship speed exceeds a predetermined threshold. Further, it may be determined that it is necessary to activate the fin stabilizers 10 on both sides if the roll angle or the calculated fin operation angle is larger than the fourth predetermined value and the ship speed exceeds a predetermined threshold.

When it is determined in step S103 of Fig. 9 and step S203 of Fig. 10 that the ship operation is provided by only the fin stabilizer 10 on one side, the fin stabilizer control unit 41 preferentially selects either one of the starboard and port fin stabilizers 10 or otherwise makes selection in accordance with switching of a switch set by the crew.

The fin stabilizer control unit 41 may select the fin stabilizer 10 for preferential selection as follows.

As illustrated in Fig. 8, the information measuring device 30 has the position information detection unit 36 and the weather information detection unit 37.

The position information detection unit 36 detects position information on the position at which the ship 1 navigates. The position information is detected by using Global Positioning System (GPS), for example.

The weather information detection unit 37 identifies the sea area in which the ship 1 navigates based on the position information detected by the position information detection unit 36 and detects weather information on the identified sea area. The weather information may be acquired by any method such as acquiring weather information from forecast data from the World Meteorological Organization, acquiring weather information from a sensor or the like installed in the information measuring device 30, or the like. The weather information includes wave direction information (information on wave directions) or wind direction information (information on wind directions) in the sea area in which the ship 1 navigates.

The fin stabilizer control unit 41 acquires the position information on the ship 1 from the position information detection unit 36 and acquires weather information from the weather information detection unit 37. The fin stabilizer control unit 41 identifies the side on which the ship 1 will not be subjected to waves based on the wave direction information in the acquired weather information and preferentially selects the fin stabilizer 10 on the side not subjected to waves.

Further, the fin stabilizer control unit 41 identifies the leeward side of the ship 1 based on the wind direction information and preferentially selects the fin stabilizer 10 on the leeward side.

When either one of the fin stabilizers 10 is operated to perform one-side stabilizing operation, since the fin stabilizer 10 to be operated is determined based on wave direction information or wind direction information, control can be performed to operate the fin stabilizer 10 on the side not subjected to waves when the determination is based on the wave direction information or operate the fin stabilizer 10 on the leeward side when the determination is based on the wind direction information.

When either one of the fin stabilizers 10 is operated, it is preferable that the fin stabilizer 10 in use be not affected by fluid movement due to waves. This is because, if waves break onto the fin 12, expected lifting force is unable to be exerted. Thus, if the fin stabilizer 10 on the side not subjected to waves or on the leeward side is operated, this enables selection and operation of the fin stabilizer 10 which is less likely to be affected by fluid movement due to waves and can exert the expected lifting force.

Furthermore, for example, when a ship 1 navigates in the waters around Japan, the fin stabilizer 10 may be selected for preferential selection as follows.

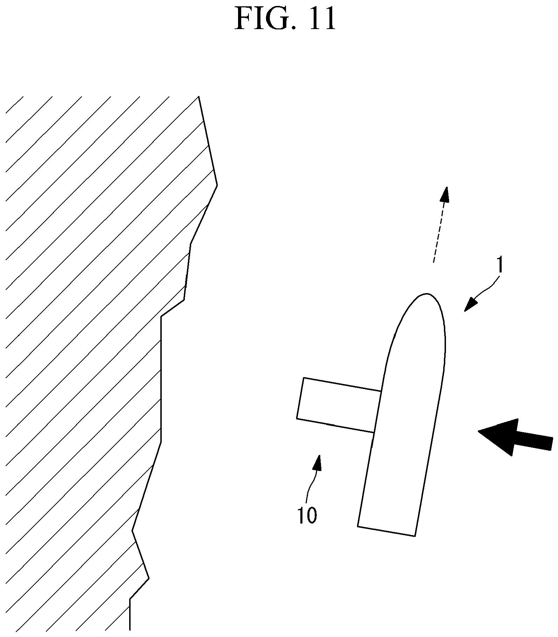

Fig. 11 illustrates a plan view of an example of a ship navigating near a coast.

For example, when the ship 1 navigates in the waters around Japan, since waves break onto the coast from the offing, it is known that the ship 1 is often subjected to waves on the offshore side.

In Fig. 11, the ship 1 is navigating near a coast (land) (hatched part) in the dashed line direction. It is assumed that waves break onto the coast from the offing in the black arrow direction.

As illustrated in Fig. 11, the starboard side of the ship 1 faces the offing, and the port side of the ship 1 faces the coast. Further, when the upward direction in Fig. 11 is the northern direction, the traveling direction of the ship 1 is substantially north.

As illustrated in Fig. 8, the information measuring device 30 has the traveling direction detection unit 38.

The traveling direction detection unit 38 detects the traveling direction in which the ship 1 navigates. The traveling direction is detected by using a gyro compass equipped to the ship 1, for example.

The fin stabilizer control unit 41 acquires the position information on the ship 1 from the position information detection unit 36 and acquires the traveling direction from the traveling direction detection unit 38. The fin stabilizer control unit 41 recognizes the positional relationship to a coast and the wave direction based on the acquired position information and determines which side of the ship 1 relative to the traveling direction faces the coastal side. In the case of Fig. 11, since the port side faces the coastal side, the fin stabilizer 10 on the port side is preferentially selected.

For example, when the traveling direction of the ship 1 is south direction opposite to Fig. 11, the fin stabilizer 10 on the starboard side that is the coastal side is preferentially selected. Further, when a coast is on the starboard side of the ship 1 and the traveling direction of the ship 1 is north, the fin stabilizer 10 on starboard side that is the coastal side is preferentially selected.

Accordingly, when either one of the fin stabilizers 10 is operated to perform one-side stabilizing operation, since the fin stabilizer 10 to be operated is determined based on the traveling direction and the position information, the positional relationship to the coast (land) can be recognized from the traveling direction and the position information, and the control can be performed to operate the fin stabilizer 10 on the coastal side out of the fin stabilizers 10 on the coastal side and the offshore side.

For example, when the ship 1 navigates in the waters around Japan, waves break onto the coast from the offing. It is considered that these waves affect the hull motion. For example, when the ship 1 navigates in the Pacific Ocean, the starboard of the ship 1 is often subjected to waves when the traveling direction is northeast, and the port of the ship 1 is often subjected to waves when the traveling direction is southwest that is the opposite to the above. On the other hand, when the ship 1 navigates in the Sea of Japan, the tendency will be opposite to the above.

Thus, when the ship 1 navigates in the Pacific Ocean, the fin stabilizer 10 on the port side of the ship 1 is preferentially operated when the traveling direction is northeast, and the fin stabilizer 10 on the starboard side of the ship 1 is preferentially operated when the traveling direction is southwest. Accordingly, the impact of waves can be suppressed, and lifting force by each fin stabilizer 10 can be effectively exerted.

Further, the fin stabilizer control unit 41 may select the fin stabilizer 10 for preferential selection as follows.

A starter panel (not illustrated) of motors (not illustrated) that operate the fin stabilizers 10 is provided near the port and starboard fin stabilizers 10. Start and stop of the motors are controlled by the starter panel.

An hour meter that can measure the drive period of the motor is installed in the starter panel. This enables the fin stabilizer control unit 41 to acquire respective drive periods of the port and starboard motors. The fin stabilizer control unit 41 compares the acquired drive periods of the port and starboard motors with each other and preferentially selects the fin stabilizer 10 having the shorter drive period.

Accordingly, when either one of the fin stabilizers 10 is operated to perform one-side stabilizing operation, since the control is performed to operate the fin stabilizer 10 having the shorter operation period measured by the hour meter, imbalance in the drive periods of the fin stabilizers 10 can be suppressed, and the drive periods of respective fin stabilizers 10 can be equalized.

As described above, according to the control device, the ship having the control device, and the method of controlling the ship of the present embodiment, the following effects and advantages are achieved.

When the fin stabilizers 10 on both sides are in operation, the fin 12 of one of the fin stabilizers 10 is retracted if the attitude information on the ship 1 is less than the first predetermined value, and when the fin stabilizer 10 on one side is in operation, the fins 12 of the fin stabilizers 10 on both sides are retracted if the attitude information is less than the second predetermined value. Accordingly, it can be determined based on attitude information on the ship 1 whether or not one or both fins 12 of one or both fin stabilizers 10 are required to be retracted, and if required, one or both fins can be automatically retracted. Since the determination as to whether or not retraction is required is automatically performed based on a quantitative condition, it is neither necessary for a crew to always monitor motion of the ship 1 nor to have a skillful technique for the determination.

Since the fin stabilizer 10 is to convert propulsion force of a ship 1 into force that prevents rolling motion in order to suppress rolling motion of the ship 1, the use of the fin stabilizer 10 may reduce the ship speed and thus may cause deterioration of fuel consumption of the main engine of the ship 1.

In the present embodiment, when it is determined based on attitude information on the ship 1 that motion is small, one of the fins 12 is retracted to perform one-side stabilizing operation, and when the motion has subsided, the fins 12 of the fin stabilizers 10 on both sides are retracted, and therefore, one or both fin stabilizers 10 are used only when required and are retracted when not required, which can suppress the fuel consumption of the main engine of the ship 1 and contribute to energy saving. When it is not required to use the fin stabilizers 10 on both sides even though there is some motion of the ship 1, the use of only the fin stabilizer 10 on one side can achieve both motion reduction performance and power saving.

The situation that lifting force by the fin stabilizer 10 is no longer necessary can be determined from a reduced fin operation angle of the fin stabilizer 10. The fin operation angle is controlled to increase when the rolling motion of the ship 1 is large and to decrease when the rolling motion is small. When the fin operation angle is small, there is a less need for operating the fin stabilizer 10 because the rolling motion of the ship 1 is small, and it is therefore possible to determine that the fin 12 of the fin stabilizer 10 can be retracted.

Further, one or both fins 12 of one or both fin stabilizers 10 are automatically retracted when the ship speed detected by the ship speed detection unit 31 becomes less than a predetermined speed such as when the ship 1 reaches land.

Further, according to the present embodiment, when the fins 12 of the fin stabilizers 10 on both sides have been retracted, either one of the fin stabilizers 10 is activated if the attitude information on the ship 1 is greater than the third predetermined value, and when the fin 12 of the fin stabilizer 10 on one side has been retracted, the fin stabilizers 10 on both sides are activated if the attitude information is greater than the fourth predetermined value. Accordingly, it can be determined based on the attitude information on the ship 1 whether or not one or both fin stabilizers 10 are required to be activated, and if required, one or both fin stabilizers 10 can be automatically activated. Since the determination as to whether or not activation is required is automatically performed based on a quantitative condition, it is neither necessary for a crew to always monitor motion of the ship 1 nor to have a skillful technique for the determination.

Since the fin stabilizer 10 is to convert propulsion force of the ship 1 into force that prevents rolling motion in order to suppress rolling motion of the ship 1, the use of the fin stabilizer 10 may reduce the ship speed and thus may cause deterioration of fuel consumption of the main engine of the ship 1.

In the present embodiment, when it is determined based on attitude information on the ship 1 that motion of the ship is occurring, one of the fin stabilizers 10 is activated to perform one-side stabilizing operation, and when the motion does not subside even with the one-side stabilizing operation, the fin stabilizers 10 on both sides are activated. Accordingly, one or both fin stabilizers 10 are used only when required, which can suppress the fuel consumption of the main engine of the ship 1 and contribute to energy saving. When it is not required to use the fin stabilizers 10 on both sides even though there is some motion of the ship 1, the use of only the fin stabilizer 10 on one side can achieve both motion reduction performance and power saving.

The situation that lifting force by the fin stabilizer 10 is necessary can be determined from an increased roll angle of the ship 1 due to occurrence of rolling motion in the ship 1. Further, a fin operation angle corresponding to the roll angle that requires lifting force is calculated, and the determination can also be made from an increased fin operation angle.

Further, according to the present embodiment, it can be determined that it is necessary to reduce motion of the ship 1 because rolling motion of the ship 1 is occurring and that it is possible to generate lifting force by the fin stabilizer 10 because the ship speed is high. Therefore, since the fin stabilizer 10 is activated when the ship 1 can provide required lifting force, the motion reduction performance by the fin stabilizer 10 can be effectively and suitably utilized.

### {Reference Signs List}

- 1: ship
- 5: fin recess
- 10: fin stabilizer
- 12: fin
- 16: fin body
- 14: flap
- 30: information measuring device
- 40: control device
- 41: fin stabilizer control unit

## Claims

1. A control device for a ship (1) comprising retractable fin stabilizers (10) on both sides, the control device (40) being configured to perform control by:
acquiring attitude information from an information measuring device (30) that measures the attitude information on the ship (1), wherein the attitude information is any one of a fin operation angle of each of the fin stabilizers (10) and a ship speed of the ship (1);
**characterized in that**
the control is configured to be performed such that
when the fin stabilizers (10) on both sides are in operation, a fin (12) of either one of the fin stabilizers (10) is retracted when it is determined that the attitude information is less than a first predetermined value; and
when either one of the fin stabilizers (10) is in operation, fins (12) of the fin stabilizers (10) on both sides are retracted when it is determined that the attitude information is less than a second predetermined value.

2. A control device for a ship (1) comprising retractable fin stabilizers (10) on both sides, the control device (40) being configured to perform control by:
acquiring attitude information from an information measuring device (30) that measures the attitude information on the ship (1), wherein the attitude information is any one of a fin operation angle of each of the fin stabilizers (10) and a roll angle of the ship (1);
**characterized in that**
the control is configured to be performed such that
when fins (12) of the fin stabilizers (10) on both sides are in a retracted state, a fin (12) of either one of the fin stabilizers (10) is activated when it is determined that the attitude information is greater than a third predetermined value; and
when a fin (12) of either one of the fin stabilizers (10) is in a retracted state, the fin stabilizers (10) on both sides are activated when it is determined that the attitude information is greater than a fourth predetermined value.

3. The control device according to claim 2, wherein the control device (40) is configured to perform control such that,
when fins (12) of the fin stabilizers (10) on both sides are in a retracted state, either one of the fin stabilizers (10) is activated when it is determined that the attitude information is greater than the third predetermined value and a ship speed of the ship (1) exceeds a predetermined threshold, and
when a fin (12) of either one of the fin stabilizers (10) is in a retracted state, the fin stabilizers (10) on both sides are activated when it is determined that the attitude information is greater than the fourth predetermined value and a ship speed of the ship (1) exceeds a predetermined threshold.

4. The control device according to any one of claim 1 to claim 3 comprising:
a position information detection unit (36) that detects position information on the ship (1); and
a weather information detection unit (37) that, based on the position information, is configured to identify a sea area in which the ship (1) navigates and detect weather information on the sea area,
wherein the weather information includes wave direction information or wind direction information on the sea area, and
wherein the control device (40) is configured to perform control such that, when either one of the fin stabilizers (10) is operated to perform one-side stabilizing operation, one of the fin stabilizers (10) on a side not subjected to waves or a leeward side based on the wave direction information or the wind direction information is operated.

5. The control device according to claim 4 further comprising a traveling direction detection unit (38) that is configured to detect a traveling direction of the ship,
wherein the control device (40) is configured to perform control such that, when either one of the fin stabilizers (10) is operated to perform one-side stabilizing operation, the fin stabilizer (10) on a coastal side out of the fin stabilizers (10) on the coastal side and an offshore side based on the traveling direction and the position information is operated.

6. The control device according to any one of claim 1 to claim 3,
wherein an hour meter that measures operation periods of motors is installed in the motors that operate the fin stabilizers (10), and
wherein the control device (40) is configured to perform control such that, when either one of the fin stabilizers (10) is operated to perform one-side stabilizing operation, one of the fin stabilizer (10) having the shorter operation period is operated.

7. A ship comprising the control device according to any one of claim 1 to claim 3.

8. A method of controlling a ship (1) comprising retractable fin stabilizers (10) on both sides, the method comprising:
a step of acquiring attitude information on the ship (1), wherein the attitude information is any one of a fin operation angle of each of the fin stabilizers (10) and a ship speed of the ship (1);
a one-side retraction step of, when the fin stabilizers (10) on both sides are in operation, retracting a fin (12) of either one of the fin stabilizers (10) when it is determined that the attitude information is less than a first predetermined value; and
a both-side retraction step of, when either one of the fin stabilizers (10) is in operation in accordance with the one-side retraction step, retracting fins (12) of the fin stabilizers (10) on both sides when it is determined that the attitude information is less than a second predetermined value.

9. A method of controlling a ship (1) comprising retractable fin stabilizers (10) on both sides, the method comprising:
a step of acquiring attitude information on the ship (1), wherein the attitude information is any one of a fin operation angle of each of the fin stabilizers (10) and a roll angle of the ship (1);
a one-side activation step of, when fins of the fin stabilizers (10) on both sides are in a retracted state, activating either one of the fin stabilizers (10) when it is determined that the attitude information is greater than a third predetermined value; and
a both-side activation step of, when a fin (12) of either one of the fin stabilizers (10) is in a retracted state in accordance with the one-side activation step, activating the fin stabilizers (10) on both sides when it is determined that the attitude information is greater than a fourth predetermined value.

## Patentansprüche

1. Steuervorrichtung für ein Schiff (1), das einziehbare Flossenstabilisatoren (10) auf beiden Seiten umfasst, wobei die Steuervorrichtung (40) dazu konfiguriert ist, Steuerung durchzuführen durch:
Erfassen von Lageinformationen von einer Informationsmessvorrichtung (30), die die Lageinformationen über das Schiff (1) misst, wobei die Lageinformationen eines von einem Flossenbetriebswinkel jedes der Flossenstabilisatoren (10) und einer Schiffsgeschwindigkeit des Schiffs (1) sind;
**dadurch gekennzeichnet, dass**
die Steuerung dazu konfiguriert ist, derart durchgeführt zu werden, dass
eine Flosse (12) eines der Flossenstabilisatoren (10) eingezogen wird, wenn die Flossenstabilisatoren (10) auf beiden Seiten in Betrieb sind, wenn bestimmt wird, dass die Lageinformationen kleiner als ein erster vorbestimmter Wert sind; und
Flossen (12) der Flossenstabilisatoren (10) auf beiden Seiten eingezogen werden, wenn einer der Flossenstabilisatoren (10) in Betrieb ist, wenn bestimmt wird, dass die Lageinformationen kleiner als ein zweiter vorbestimmter Wert sind.

2. Steuervorrichtung für ein Schiff (1), das einziehbare Flossenstabilisatoren (10) auf beiden Seiten umfasst, wobei die Steuervorrichtung (40) dazu konfiguriert ist, Steuerung durchzuführen durch:
Erfassen von Lageinformationen von einer Informationsmessvorrichtung (30), die die Lageinformationen über das Schiff (1) misst, wobei die Lageinformationen eines sind von einem Flossenbetriebswinkel jedes der Flossenstabilisatoren (10) und einem Rollwinkel des Schiffs (1);
**dadurch gekennzeichnet, dass**
die Steuerung dazu konfiguriert ist, derart durchgeführt zu werden, dass
eine Flosse (12) eines der Flossenstabilisatoren (10) aktiviert wird, wenn sich die Flossen (12) der Flossenstabilisatoren (10) auf beiden Seiten in einem eingezogenen Zustand befinden, wenn bestimmt wird, dass die Lageinformationen größer als ein dritter vorbestimmter Wert sind; und
die Flossenstabilisatoren (10) auf beiden Seiten aktiviert werden, wenn sich eine Flosse (12) eines der beiden Flossenstabilisatoren (10) in einem eingezogenen Zustand befindet, wenn bestimmt wird, dass die Lageinformationen größer als ein vierter vorbestimmter Wert sind.

3. Steuervorrichtung nach Anspruch 2, wobei die Steuervorrichtung (40) dazu konfiguriert ist, eine Steuerung derart durchzuführen, dass,
einer der Flossenstabilisatoren (10) aktiviert wird, wenn sich Flossen (12) der Flossenstabilisatoren (10) auf beiden Seiten in einem eingezogenen Zustand befinden, wenn bestimmt wird, dass die Lageinformationen größer als der dritte vorbestimmte Wert sind und eine Schiffsgeschwindigkeit des Schiffs (1) eine vorbestimmte Schwelle überschreitet, und
die Flossenstabilisatoren (10) auf beiden Seiten aktiviert werden, wenn sich eine Flosse (12) eines der Flossenstabilisatoren (10) in einem eingezogenen Zustand befindet, wenn bestimmt wird, dass die Lageinformationen größer als der vierte vorbestimmte Wert sind und eine Schiffsgeschwindigkeit des Schiffs (1) eine vorbestimmte Schwelle überschreitet.

4. Steuervorrichtung nach einem der Ansprüche 1 bis 3, die Folgendes umfasst:
eine Positionsinformationsdetektierungseinheit (36), die Positionsinformationen über das Schiff (1) detektiert; und
eine Wetterinformationsdetektierungseinheit (37), die dazu konfiguriert ist, basierend auf den Positionsinformationen ein Seegebiet zu identifizieren, in dem das Schiff (1) navigiert, und Wetterinformationen über das Seegebiet zu detektieren,
wobei die Wetterinformationen Wellenrichtungsinformationen oder Windrichtungsinformationen über das Seegebiet einschließen und
wobei die Steuervorrichtung (40) dazu konfiguriert ist, eine Steuerung derart durchzuführen, dass, wenn einer der Flossenstabilisatoren (10) dazu betrieben wird, einen einseitigen Stabilisierungsbetrieb durchzuführen, einer der Flossenstabilisatoren (10) betrieben wird, der basierend auf den Wellenrichtungsinformationen oder den Windrichtungsinformationen auf einer Seite, die keinen Wellen ausgesetzt ist, oder auf einer Leeseite ist.

5. Steuervorrichtung nach Anspruch 4, weiter umfassend eine Fahrtrichtungsdetektierungseinheit (38), die dazu konfiguriert ist, eine Fahrtrichtung des Schiffs zu detektieren,
wobei die Steuervorrichtung (40) dazu konfiguriert ist, eine Steuerung derart durchzuführen, dass, wenn einer der Flossenstabilisatoren (10) dazu betrieben wird, einen einseitigen Stabilisierungsbetrieb durchzuführen, der Flossenstabilisator (10) auf einer Küstenseite von den Flossenstabilisatoren (10) auf der Küstenseite und einer küstenabgewandten Seite basierend auf der Fahrtrichtung und den Positionsinformationen betrieben wird.

6. Steuervorrichtung nach einem der Ansprüche 1 bis 3,
wobei ein Stundenzähler, der Betriebszeiträume von Motoren misst, in den Motoren installiert ist, die die Flossenstabilisatoren (10) betreiben, und
wobei die Steuervorrichtung (40) dazu konfiguriert ist, eine Steuerung derart durchzuführen, dass, wenn einer der Flossenstabilisatoren (10) dazu betrieben wird, einen einseitigen Stabilisierungsbetrieb durchzuführen, einer der Flossenstabilisatoren (10) betrieben wird, der den kürzeren Betriebszeitraum aufweist.

7. Schiff, das die Steuervorrichtung nach einem der Ansprüche 1 bis 3 umfasst.

8. Verfahren zum Steuern eines Schiffs (1), das einziehbare Flossenstabilisatoren (10) auf beiden Seiten umfasst, wobei das Verfahren Folgendes umfasst:
einen Schritt eines Erfassens von Lageinformationen über das Schiff (1), wobei die Lageinformationen eines von einem Flossenbetriebswinkel jedes der Flossenstabilisatoren (10) und einer Schiffsgeschwindigkeit des Schiffs (1) sind;
einen einseitigen Einziehschritt eines Einziehens einer Flosse (12) eines der Flossenstabilisatoren (10), wenn die Flossenstabilisatoren (10) auf beiden Seiten in Betrieb sind, wenn bestimmt wird, dass die Lageinformationen kleiner als ein erster vorbestimmter Wert sind; und
einen beidseitigen Einziehschritt eines Einziehens von Flossen (12) der Flossenstabilisatoren (10) auf beiden Seiten, wenn einer der Flossenstabilisatoren (10) gemäß dem einseitigen Einziehschritt in Betrieb ist, wenn bestimmt wird, dass die Lageinformationen kleiner als ein zweiter vorbestimmter Wert sind.

9. Verfahren zum Steuern eines Schiffs (1), das einziehbare Flossenstabilisatoren (10) auf beiden Seiten umfasst, wobei das Verfahren Folgendes umfasst:
einen Schritt eines Erfassens von Lageinformationen über das Schiff (1), wobei die Lageinformationen eines sind von einem Flossenbetriebswinkel jedes der Flossenstabilisatoren (10) und einem Rollwinkel des Schiffs (1);
einen einseitigen Aktivierungsschritt eines Aktivierens eines der Flossenstabilisatoren (10), wenn sich Flossen der Flossenstabilisatoren (10) auf beiden Seiten in einem eingezogenen Zustand befinden, wenn bestimmt wird, dass die Lageinformationen größer als ein dritter vorbestimmter Wert sind; und
einen beidseitigen Aktivierungsschritt eines Aktivierens der Flossenstabilisatoren (10) auf beiden Seiten, wenn sich eine Flosse (12) eines der Flossenstabilisatoren (10) gemäß dem einseitigen Aktivierungsschritt in einem eingezogenen Zustand befindet, wenn bestimmt wird, dass die Lageinformationen größer als ein vierter vorbestimmter Wert sind.

## Revendications

1. Dispositif de commande pour un navire (1) comprenant des stabilisateurs à ailerons rétractables (10) des deux côtés, le dispositif de commande (40) étant configuré pour mettre en oeuvre une commande en :
acquérant des informations d'attitude à partir d'un dispositif de mesure d'informations (30) qui mesure les informations d'attitude relatives au navire (1), dans lequel les informations d'attitude sont une information quelconque parmi un angle de fonctionnement d'aileron de chacun des stabilisateurs à ailerons (10) et une vitesse de navire du navire (1) ;
**caractérisé en ce que**
la commande est configurée pour être mise en oeuvre de telle sorte que,
lorsque les stabilisateurs à ailerons (10) des deux côtés sont en fonctionnement, un aileron (12) de l'un ou l'autre des stabilisateurs à ailerons (10) se rétracte lorsqu'il est déterminé que les informations d'attitude sont inférieures à une première valeur prédéterminée et,
lorsque l'un ou l'autre des stabilisateurs à ailerons (10) est en fonctionnement, des ailerons (12) des stabilisateurs à ailerons (10) des deux côtés se rétractent lorsqu'il est déterminé que les informations d'attitude sont inférieures à une deuxième valeur prédéterminée.

2. Dispositif de commande pour un navire (1) comprenant des stabilisateurs à ailerons rétractables (10) des deux côtés, le dispositif de commande (40) étant configuré pour mettre en oeuvre une commande en :
acquérant des informations d'attitude à partir d'un dispositif de mesure d'informations (30) qui mesure les informations d'attitude relatives au navire (1), dans lequel les informations d'attitude sont un angle quelconque parmi un angle de fonctionnement d'aileron de chacun des stabilisateurs à ailerons (10) et un angle de roulis du navire (1) ;
**caractérisé en ce que**
la commande est configurée pour être mise en oeuvre de telle sorte que
lorsque des ailerons (12) des stabilisateurs à ailerons (10) des deux côtés sont dans un état rétracté, un aileron (12) de l'un ou l'autre des stabilisateurs à ailerons (10) est activé lorsqu'il est déterminé que les informations d'attitude sont supérieures à une troisième valeur prédéterminée ; et
lorsqu'un aileron (12) de l'un ou l'autre des stabilisateurs à ailerons (10) est dans un état rétracté, les stabilisateurs à ailerons (10) des deux côtés sont activés lorsqu'il est déterminé que les informations d'attitude sont supérieures à une quatrième valeur prédéterminée.

3. Dispositif de commande selon la revendication 2, dans lequel le dispositif de commande (40) est configuré pour mettre en oeuvre une commande de telle sorte que,
lorsque des ailerons (12) des stabilisateurs à ailerons (10) des deux côtés sont dans un état rétracté, l'un ou l'autre des stabilisateurs à ailerons (10) est activé lorsqu'il est déterminé que les informations d'attitude sont supérieures à la troisième valeur prédéterminée et une vitesse de navire du navire (1) est supérieure à un seuil prédéterminé et
lorsqu'un aileron (12) de l'un ou l'autre des stabilisateurs à ailerons (10) est dans un état rétracté, les stabilisateurs à ailerons (10) des deux côtés sont activés lorsqu'il est déterminé que les informations d'attitude sont supérieures à la quatrième valeur prédéterminée et une vitesse de navire du navire (1) est supérieure à un seuil prédéterminé.

4. Dispositif de commande selon l'une quelconque des revendications 1 à 3 comprenant :
une unité de détection d'informations de position (36) qui détecte des informations de position relatives au navire (1) ; et
une unité de détection d'informations météorologiques (37) qui, sur la base des informations de position, est configurée pour identifier une zone maritime dans laquelle le navire (1) navigue et détecte des informations météorologiques relatives à la zone maritime,
dans lequel les informations météorologiques incluent des informations de direction des vagues ou des informations de direction du vent relatives à la zone maritime, et
dans lequel le dispositif de commande (40) est configuré pour mettre en oeuvre une commande de telle sorte que, lorsque l'un ou l'autre des stabilisateurs à ailerons (10) fonctionne pour mettre en oeuvre une opération de stabilisation d'un côté, un des stabilisateurs à ailerons (10) fonctionne sur un côté non soumis aux vagues ou un côté sous le vent sur la base des informations de direction des vagues ou des informations de direction du vent.

5. Dispositif de commande selon la revendication 4, comprenant en outre une unité de détection de direction de déplacement (38) qui est configurée pour détecter une direction de déplacement du navire,
dans lequel le dispositif de commande (40) est configuré pour mettre en oeuvre une commande de telle sorte que, lorsque l'un ou l'autre des stabilisateurs à ailerons (10) fonctionne pour mettre en oeuvre un fonctionnement de stabilisation d'un côté, le stabilisateur à aileron (10) sur le côté côtier, parmi les stabilisateurs à ailerons (10) sur le côté côtier et un côté au large, fonctionne sur la base de la direction de déplacement et des informations de position.

6. Dispositif de commande selon l'une quelconque des revendications 1 à 3,
dans lequel un compteur horaire qui mesure des périodes de fonctionnement de moteurs est installé dans les moteurs qui font fonctionner les stabilisateurs à ailerons (10), et
dans lequel le dispositif de commande (40) est configuré pour mettre en oeuvre une commande de telle sorte que, lorsque l'un ou l'autre des stabilisateurs à ailerons (10) fonctionne pour mettre en oeuvre un fonctionnement de stabilisation d'un côté, un des stabilisateurs à aileron (10) présentant la durée de fonctionnement la plus courte fonctionne.

7. Navire comprenant le dispositif de commande selon l'une quelconque des revendications 1 à 3.

8. Procédé destiné à commander un navire (1) comprenant des stabilisateurs à ailerons rétractables (10) des deux côtés, le procédé comprenant :
une étape d'acquisition d'informations d'attitude relatives au navire (1), dans lequel les informations d'attitude sont un angle quelconque parmi un angle de fonctionnement d'aileron de chacun des stabilisateurs à ailerons (10) et une vitesse de navire du navire (1) ;
une étape de rétraction d'un côté destinée, lorsque les stabilisateurs à ailerons (10) des deux côtés sont en fonctionnement, à rétracter un aileron (12) de l'un ou l'autre des stabilisateurs à ailerons (10) lorsqu'il est déterminé que les informations d'attitude sont inférieures à une première valeur prédéterminée ; et
une étape de rétraction des deux côtés destinée, lorsque l'un ou l'autre des stabilisateurs à ailerons (10) est en fonctionnement conformément à l'étape de rétraction d'un côté, à rétracter des ailerons (12) des stabilisateurs à ailerons (10) des deux côtés lorsqu'il est déterminé que les informations d'attitude sont inférieures à une deuxième valeur prédéterminée.

9. Procédé destiné à commander un navire (1) comprenant des stabilisateurs à ailerons rétractables (10) des deux côtés, le procédé comprenant :
une étape d'acquisition d'informations d'attitude relatives au navire (1), dans lequel les informations d'attitude sont un angle quelconque parmi un angle de fonctionnement d'aileron de chacun des stabilisateurs à ailerons (10) et un angle de roulis du navire (1) ;
une étape d'activation d'un côté destinée, lorsque des ailerons des stabilisateurs à ailerons (10) des deux côtés sont dans un état rétracté, à activer l'un ou l'autre des stabilisateurs à ailerons (10) lorsqu'il est déterminé que les informations d'attitude sont supérieures à une troisième valeur prédéterminée ; et
une étape d'activation des deux côtés destinée, lorsqu'un aileron (12) de l'un ou l'autre des stabilisateurs à ailerons (10) est dans un état rétracté conformément à l'étape d'activation d'un côté, à activer les stabilisateurs à ailerons (10) des deux côtés lorsqu'il est déterminé que les informations d'attitude sont supérieures à une quatrième valeur prédéterminée.
